# EUROPEAN PATENT APPLICATION

(11) **EP 0 540 034 A2**
(43) Date of publication of application: **05.05.1993**
(21) Application number: 92118629.2
(22) Date of filing: 30.10.1992
(51) Int. Cl.: H04N 9/79

(54) **Semiconductor integrated circuit for image processing**

(30) Priority: 01.11.1991 JP 313340/91
(71) Applicant: HITACHI, LTD., Chiyoda-ku, Tokyo 100 (JP)
(72) Inventor: Matsushima, Tadashi, Fujioka-shi, Gunma (JP); Sato, Tetsuo, Takasaki-shi, Gunma (JP); Furihata, Makoto, Maebashi-shi, Gunma (JP); Ogura, Setsuo, Takasaki-shi, Gunma (JP); Kawamoto, Hiroshi, Takasaki-shi, Gunma (JP)
(74) Representative: Strehl Schübel-Hopf Groening & Partner

(57) **Abstract**

A semiconductor integrated circuit for image processing includes a playback luminance signal processing circuit, a playback chromatic signal pro - cessing circuit for receiving a recorded image signal, and a TV system conversion circuit for selectively converting a TV system to a different one. The chromatic signal played back is recorded. In another embodiment, the integrated circuit includes a playback luminance signal processing circuit for re - ceiving an image signal for television, a TV system conversion circuit for selectively converting a TV system to a different one, and a recording chromatic signal processing circuit for receiving the output signal of the TV system conversion circuit.

Since the semiconductor integrated circuit is arranged so as to perform the process of not solely playing back or recording an image signal but also converting the system, a synchronizing signal necessary for playback processing and a color subcarrier generating circuit necessary for system conver - sion can be put to common use. Therefore, accurate signal processing is made possible with simplicity in construction.

## Description

### BACKGROUND OF THE INVENTION

The present invention relates to a semicon - ductor integrated circuit device having an image signal processing function of converting, for in - stance, a recorded image signal directly to what is for use in one TV system or another different system and relates to technology effectively utilizable for video tape recorders (hereinafter simply called "VTR") and the like.

TV systems are classified into three groups: NTSC system mainly employed in Japan and the United States; PAL system mainly in Europe and South East Asia; and SECAM mainly in France and Eastern Europe. With respect to the art of con - verting video signals recorded in accordance with the NTSC system to those in the PAL system, Japanese Patent Laid-Open No. 59-4290/1984, for instance, falls under this category.

### SUMMARY OF THE INVENTION

The conventional method of converting a TV system is implemented by forming an image signal in the same TV system that has been used to record the signal through VTR signal playback processing and then effecting the system conversion. In this case, the advantage is that the signal processing circuit for VTR is directly usable.

The present inventors took notice of that fact that since software for VTR in the NTSC system was predominantly great in number, there had de - veloped a demand for trying abundant software intended for the NTSC system even in the PAL system zone and so on. The present inventors have also deliberated over the feasibility of rationalizing signal processing and simplifying circuitry by processing VTR signals and carrying out TV system conversion collectively.

An object of the present invention is to provide a novel semiconductor integrated circuit for image processing which is not only simple in construction but also highly functional.

The above and further objects and novel features of the invention will become apparent from the following description of embodiments with reference to the accompanying drawings.

A brief description will subsequently given of an exemplary embodiment of the present invention disclosed in this specification. A semiconductor integrated circuit device includes a playback lu - minance signal processing circuit and playback chromatic signal processing circuit for receiving a recorded image signal, a TV system conversion circuit for selectively converting one TV system to another which is different from the former in which the chromatic signal played back by the playback chromatic signal processing circuit or a TV system conversion circuit for selectively converting one TV system to another which is different from the former that has been input, and a recording chromatic signal processing circuit for receiving an output signal of the TV system conversion circuit.

With the aforementioned means, the semicon - ductor integrated circuit is arranged so as to perform the process of not solely playing back or recording an image signal but also converting the system. As a synchronizing signal necessary for playback processing and a color sub-carrier generating circuit necessary for system conversion can be put to common use, accurate signal processing is made possible with simplicity in con - struction.

### BRIEF DESCRIPTION OF THE DRAWINGS

Fig. 1 is a block diagram of an exemplary semiconductor integrated circuit device for image processing according to the present invention.
Fig. 2 is a block diagram of another exemplary semiconductor integrated circuit for image processing according to the present invention.
Fig. 3 is a block diagram illustrating an exem - plary playback chromatic signal processing circuit and an exemplary TV system conversion circuit according to the present invention.
Fig. 4 is a detailed block diagram of an exem - plary playback chromatic signal processing circuit according to the present invention.
Fig. 5 is a detailed block diagram of an exem - plary playback chromatic signal record processing circuit of Fig. 14.
Fig 6 is a diagram illustrating the phase shifting circuit for effecting a -45° phase shift according to the present invention.
Fig. 7 is a diagram illustrating the phase shifting circuit for effecting a + 45 phase shift according to the present invention.
Fig. 8 is a circuit diagram illustrating a burst substitution circuit embodying the present inven - tion.
Fig. 9 is a timing chart illustrating the control operation of switches SW 1 - SW 3 in the TV system conversion circuit by way of example.
Fig. 10 is a vector diagram illustrating the operation of converting the NTSC system to the PAL system.
Fig. 11 is a vector diagram illustrating the operation of converting the PAL system to the NTSC system.
Fig. 12 is a block diagram of another exem - plary TV system conversion circuit according to the present invention.
Fig. 13 is a block diagram of an exemplary B - Y axis inversion circuit according to the present invention.
Fig. 14 is a block diagram illustrating an exemplary TV system conversion circuit and an ex - emplary playback chromatic signal processing circuit in a VTR recording circuit corresponding to what is shown in Fig. 2 according to the present invention.

### DESCRIPTION OF THE PREFERRED EMBODIMENTS

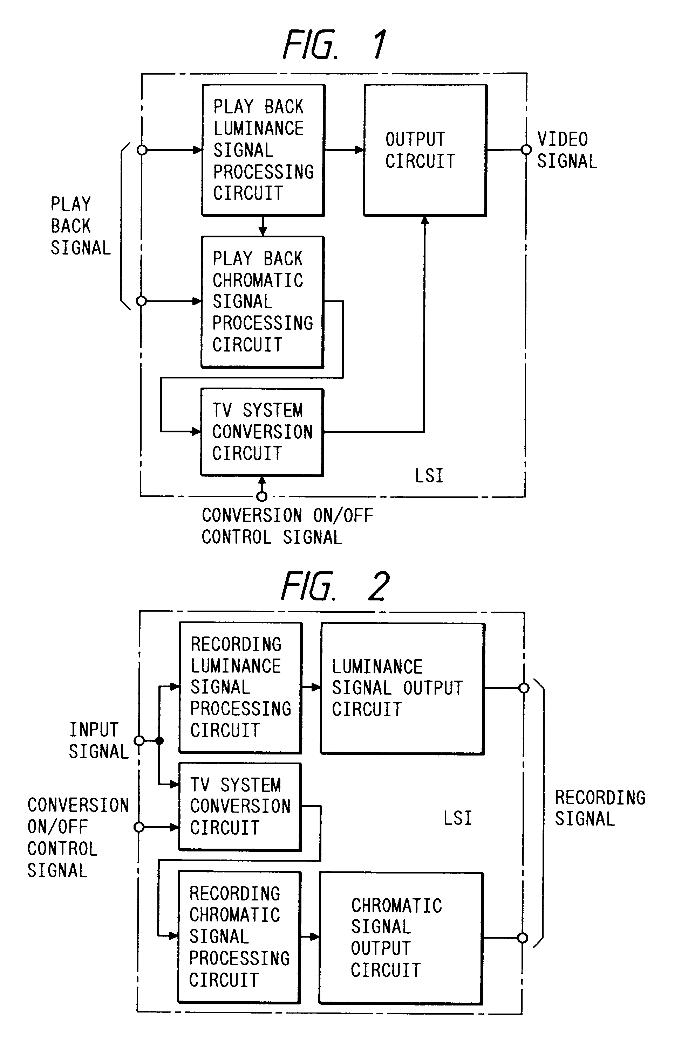

Fig. 1 is a block diagram of an exemplary semiconductor integrated circuit for image processing according to the present invention. Circuit blocks of Fig. 1 are fabricated by known integrated manufacturing technologies on a single semiconductor substrate such as monocrystalline silicon, though not restricted to this. Among these circuits, any digital circuit, though not restricted thereto, is formed of an IIL (Integrated Injection Logic) circuit, whereas any analog circuit is formed with a bipolar transistor.

A semiconductor integrated circuit device LSI in this embodiment is intended for a VTR playback circuit. As a low frequency color signal has been recorded onto a frequency modulation luminance signal on a magnetic tape in a multi-frequency recording mode, a luminance signal is isolated from a chromatic signal through high - pass and low-pass filters and both signals are applied from respective input terminals. A playback luminance signal processing circuit demodulates the frequency - modulated luminance signal to the former (frequency - demodulated) luminance signal and performs synchronizing separation. A playback chromatic signal processing circuit performs a chromatic signal playback process for converting the frequency of the signal converted to a low frequency signal to the former frequency. At this time, a burst gate pulse is used to extract a burst signal from the luminance signal. The burst gate pulse is formed based on the horizontal synchro - nizing signal formed in the synchronizing separator circuit of the playback luminance signal processing circuit. A television (called simply TV for short in Fig. 1) system conversion circuit is provided at the output of the playback chromatic signal processing circuit. In order to increase a range of uses, this TV system conversion circuit is designed to select the function of putting through the system in conformity with the chromatic signal thus played back or that of converting this system to another different system by means of a conversion ON/OFF control signal.

An output circuit combines the luminance sig - nal, the chromatic signal and synchronizing signal into a composite color video image, which is output as a video signal. The output circuit has otherwise the function of outputting the luminance and chro - matic signals separately or both of them simultaneously.

Fig. 2 is a block diagram of another exemplary semiconductor integrated circuit for image processing according to the present invention. A semiconductor integrated circuit device LSI in this embodiment is intended for a VTR recording circuit. In other words, a composite color video signal which accords with a particular TV system is ap - plied to the playback luminance signal processing circuit where it is converted into a frequency- modulated luminance signal. The TV system con - version circuit forms a chromatic signal in a TV system different from the TV system of the input - ted chromatic signal. In order to increase a range of uses as mentioned above, this TV system con - version circuit is designed to select the function of putting through the system in conformity with the chromatic signal thus played back or that of con - verting this system to another different system by means of a conversion ON/OFF control signal. The playback chromatic signal processing circuit con - verts the frequency of a color sub - carrier to a low frequency. The luminance and chromatic signals are output via respective output circuits. These signals are synthesized by a head amplifier outside and causes a low frequency conversion color signal to be recorded onto a frequency modulation lu - minance signal on a magnetic tape in a multi - frequency recording mode.

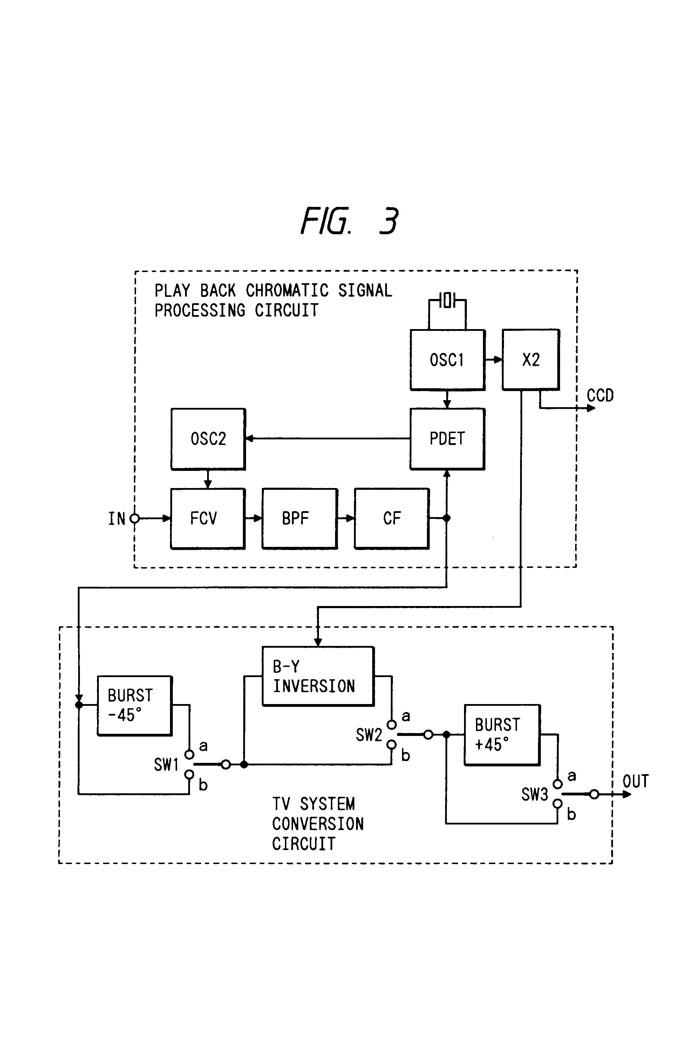

Fig. 3 is a block diagram illustrating an exem - plary playback chromatic signal processing circuit and an exemplary TV system conversion circuit of Fig. 1 according to the present invention.

Color sub-carriers fsc in the NTSC and PAL systems are converted to the following low frequencies fc in VTR of VHS at the time of record - ing.

In the NTSC system, fc = 40 f_{H} = 629.371 KHz, where horizontal frequency f_{H} is 15.734 KHz.

In the PAL system, fc = 40.125 f_{H} = 626.953 KHz, where horizontal frequency f_{H} is 15.625 KHz.

The former sub-carriers thereunder are as follows:
In the NTSC system, fsc = 455 fH/2 = 3.579545 MHz.

In the PAL system, fsc = (284 - 1/4) f_{H} + 25 Hz = 4.433619 MHz. Therefore, the playback chromatic signal processing circuit is a circuit which performs the process of restoring the low frequency conversion color signal fc to the former color sub - carrier fsc.

The low frequency conversion color signal separated by low-pass filter out of video signals recorded in a multi - recording mode is supplied from an input terminal. This signal is applied to a frequency converter circuit FCV. The frequency converter circuit FCV multiplies an oscillating fre - quency formed by an oscillation circuit OSC 2 by the low frequency conversion color signal and outputs frequency signals equivalent to the sum of and the difference between both signals resulting from the multiplication. A band pass filter BPF takes out only the frequency equivalent to the difference and outputs the color sub-carrier restored to the former frequency. This color sub- carrier is applied to a comb line filter CF where the luminance component and the adjoining crosstalk component are removed. The color sub-carrier thus played back is supplied to a phase detection circuit PDET. The phase detection circuit PDET makes a phase comparison with a reference frequency formed by a quartz oscillation circuit OSC 1 and controls the oscillating frequency of the oscillation circuit OSC 2, using its output in such a way that the aforementioned differential frequency conforms to the color sub-carrier. At this time, a reference frequency signal corresponding to the color sub-carrier fsc formed by the oscillation circuit OSC 1 is doubled by a multiplier circuit x2 and the resulting frequency is used as a clock pulse of CCD (Charge Carry Device) for effecting noise reduction in the signal processing circuit at the following stage.

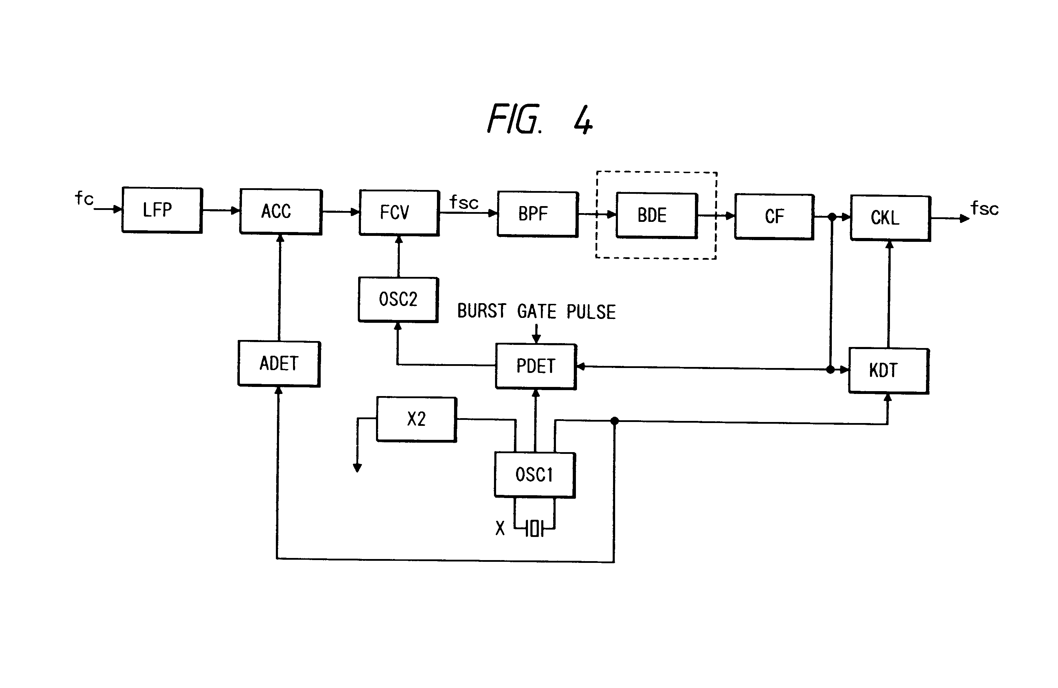

Fig. 4 is a detailed block diagram illustrating such a playback chromatic signal processing circuit as mentioned above according to the present in - vention.

The low frequency conversion color signal fc is applied via the low-pass filter to an automatic color control circuit ACC where it is set at a fixed level. The automatic color control circuit ACC is controlled by the output signal of a detection circuit ADET for receiving the output signal of the comb line filter CF at the following stage. The low frequency conversion color signal so controlled by the automatic color control circuit ACC as to remain at the fixed level is applied to the frequency converter circuit FCV. When the phase detection circuit PDET receives the burst gate pulse synchronized with a burst signal, it is activated and makes a phase comparison between the burst signal in the output signal of the comb line filter CF and the frequency of the oscillation circuit OSC 1 forming the reference signal. The output resulting from the phase comparison causes the difference between the frequency of the oscillation circuit OSC 1 and the low frequency conversion color signal to be controlled so that the difference conforms to the color sub - carrier fsc.

A burst deemphasis circuit BDE is provided at the output of the band pass filter BPF. This circuit BDE lowers the burst signal by +6 dB when the color signal is processed in the recording time standard and treble mode of the NTSC system, and puts an input signal through directly when the color signal is processed in the double mode of the NTSC system and in the PAL system. The comb line filter CF is provided at the output of the circuit BDE in order to remove the luminance signal component and the adjoining crosstalk component. Further, a color killer circuit CKL is provided at the output of the comb line filter CF. The color killer circuit CKL is controlled by a killer detection circuit KDT. The killer detection circuit KDT detects the synchronizing condition and the burst amplitude. When the synchronization is not accomplished or when the burst amplitude is too small, the killer detection circuit KDT controls the color killer circuit CKL so as to prevent a chromatic signal output from being output by muting it.

When the playback chromatic signal process - ing circuit and the TV system conversion circuit are formed in one and the same semiconductor in - tegrated circuit as shown in Fig. 3, the multiple carrier output formed in the playback chromatic signal processing circuit and the burst gate pulse, which will be described later, are directly utilizable.

In other words, the color sub-carrier that has been played back is such that the burst signal is directly put through by means of a switch SW 1 or changed in phase by -45° by a phase shifting circuit. Moreover, the signal is directly put through by means of a switch SW 2 or inverted by an inversion circuit. Further, the burst signal is directly put through by means of a switch SW 3 or changed in phase by +45° by the phase shifting circuit.

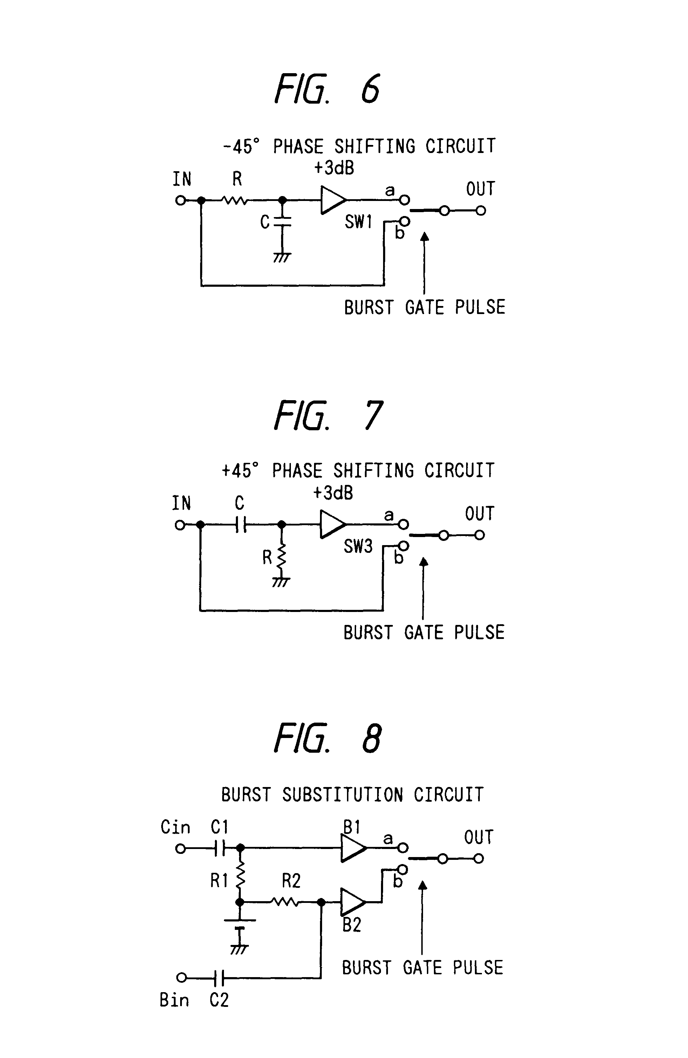

Fig. 6 is a diagram illustrating the phase shifting circuit for effecting a 45 phase shift according to the present invention.

In this embodiment, a resistor R and a capacitor C are used to shift the phase by - 45 ° . At this time, the relation among the resistor R, the capacitor C and the color sub - carrier fsc is set to fsc = 1/2_{1T}RC. An amplifier circuit is used to compensate for level reduction due to the aforementioned phase shifting operation by effecting an amplification of +3 dB.

Fig. 7 is a diagram illustrating an exemplary phase shifting circuit for effecting a +45° phase shift according to the present invention.

In this embodiment, the resistor R and the capacitor C are used to shift the phase by + 45 ° . At this time, the relation among the resistor R, the capacitor C and the color sub - carrier fsc is set to fsc = 1/2_{1T}RC as in the case of Fig. 6. The amplifier circuit is used to compensate for level reduction due to the aforementioned phase shifting operation by effecting an amplification of +3 dB.

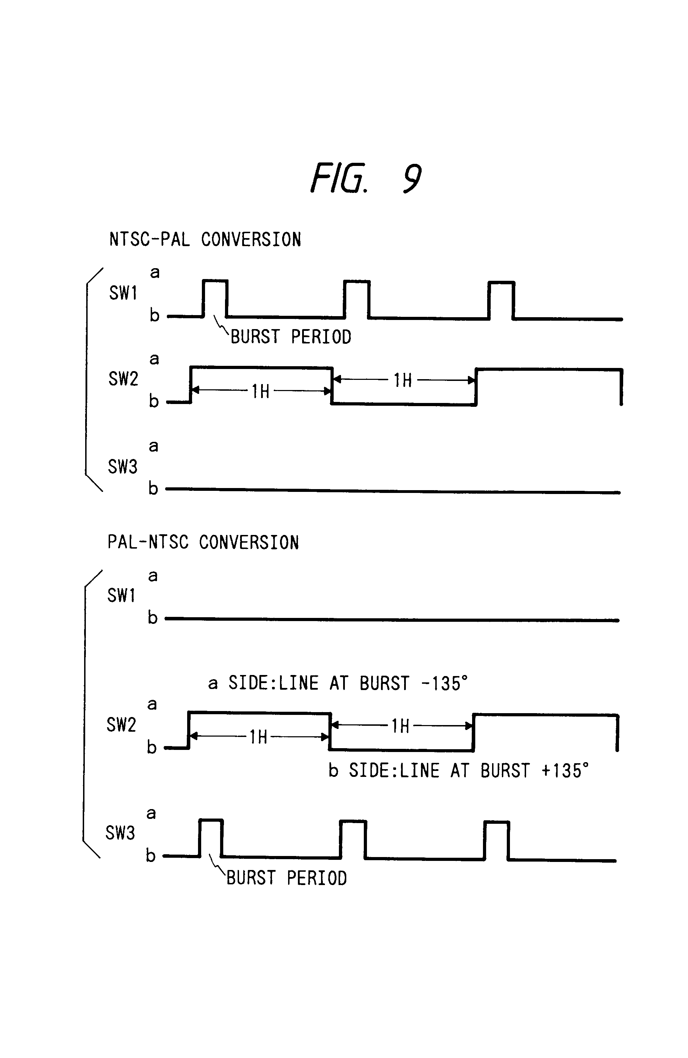

Fig. 9 is a timing chart illustrating the control operation of switches SW 1 - SW 3 in the TV system conversion circuit by way of example.

When the NTSC system is converted to the PAL system, the switch SW 1 is switched to a side for at least a burst period and connected to b side for the rest period. The switch SW 2 is switched from a to b side alternately every 1 H period. The switch SW 3 is fixedly connected to b side. The burst gate pulse is used to control the switch SW 1 for switching purposes and an output resulting from dividing the horizontal synchronizing pulse is also used to control the switch SW 2.

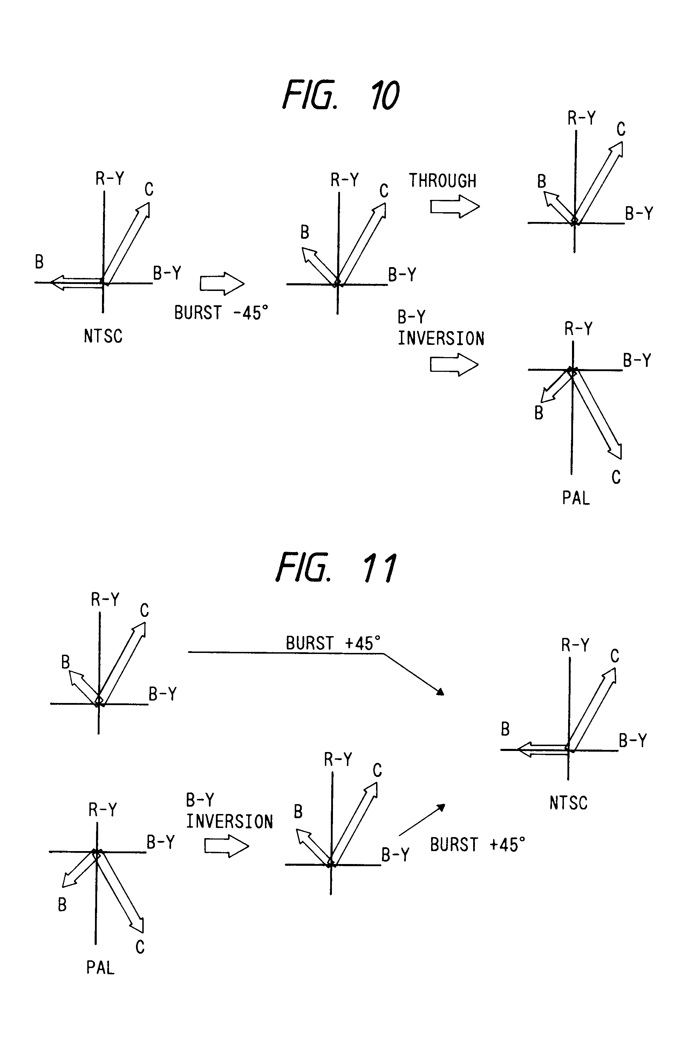

Fig. 10 is a vector diagram illustrating the operation of converting the NTSC system to the PAL system.

In the NTSC system, the burst signal B con - forms to a B - Y axis and the color signal C is expressed by components of a R - Y axis and the B - Y axis. The phases of these burst signal B and the color signal C are continuous line to line. In the PAL system, on the other hand, the burst signal varies between + 135 and - 135" every line and the R - Y axis component is inverted line to line.

Therefore, the switch SW 1 is switched to a side during the burst period to shift the phase of the burst signal by -45°. By switching the switch SW 2 to a and b sides alternately every 1 H (line) then, for instance, by putting the signal through on the b side, only the burst signal B is shifted by only - 45 and set to +135°. Moreover, the B - Y axis is inverted on the a side, whereby the R - Y axis component of the color signal is inverted, that is, the polarity is replaced, and the phase of the burst signal B changes to -135°. The switch SW 3 is kept in contact with b side at the time the NTSC system is converted to the PAL system like this and the signal subjected to system conversion is output. Since the phases of the burst signal B and the color signal C are shifted by controlling the switching of the switches SW 1, SW 2 therebetween as shown in Fig. 10, the chromatic signal in accordance with the PAL system is given.

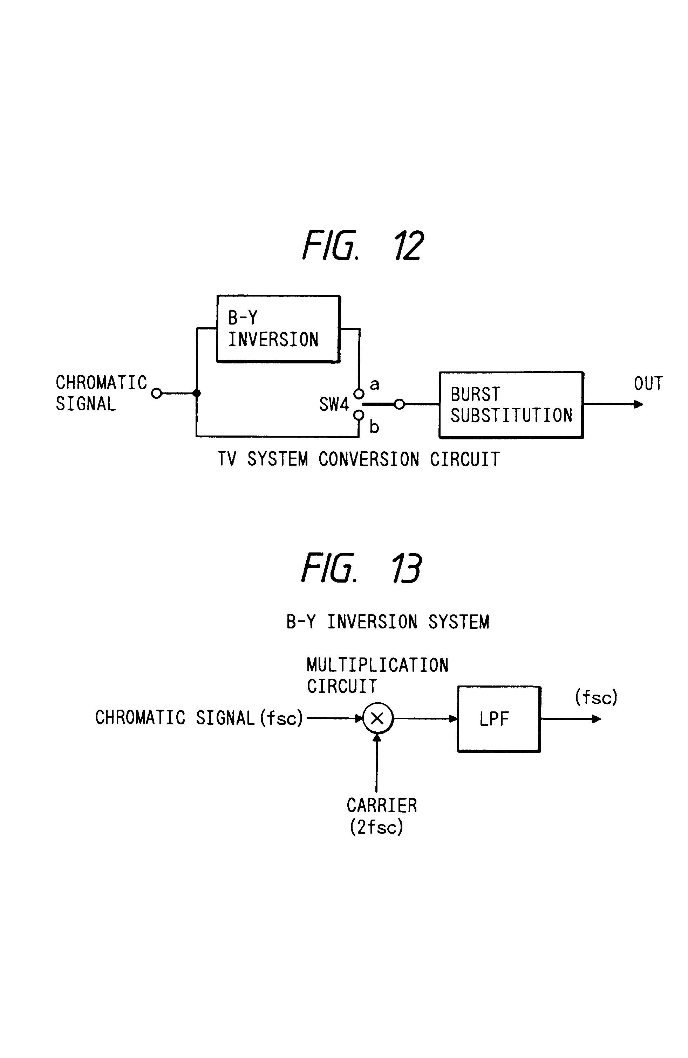

Fig. 13 is a block diagram of an exemplary B - Y axis inversion circuit according to the present invention. The B - Y inversion system causes the chromatic signal (fsc) subjected to phase modulation as stated above to be multiplied by the dou - bled color sub-carrier 2 fsc (carrier component) formed in the frequency multiplier x2 and also causes the low-pass filter LPF to fetch the difference and to carry out the aforementioned B - Y axis inversion.

When the PAL system is converted to the NTSC system in Fig. 9, the switch SW 1 is fixedly connected to b side. The switch SW 2 is switched to a side on the line at a burst of -135° and to b side at a burst of +135°. Further, the switch SW 3 is connected to a side only during the burst period and to b during the remaining one. Due to the changeover of the switch like this, an output resulting from dividing the horizontal synchronizing pulse is used to control the switch SW 2 and the burst gate pulse is used to control the switch SW 3.

Fig. 11 is a vector diagram illustrating the operation of converting the PAL system to the NTSC system.

In the PAL system, the burst signal varies between + 135 ° and -135° line to line and the B - Y axis component is shifted by 180 ° line to line.

Conversely, the switch SW 2 is switched to a and b alternately every 1 H (line). In other words, the switch SW 2 is connected to b side and put through when the burst signal is at + 135 and the PAL system is converted to the NTSC system by shifting only the burst signal B by +45°. Then the switch SW 2 is switched to a side when the burst signal is at -135° to carry out the B - Y axis inversion, causing only the burst signal to be shifted by +45°. With the changeover of the switches SW 2, SW 3 under control, the shifting in phase between the burst signal B and the color signal C is properly carried out line to line and the chromatic signal in accordance with the NTSC system can be given.

In the TV system conversion as set forth above, the multiplied color sub-carrier 2fsc is needed for the B - Y axis inversion. Moreover, the burst gate pulse, the 1/2-divided horizontal pulse signal and the like also become essential. Provided the playback chromatic signal processing circuit is formed separately from the TV system conversion circuit as before, the TV system conversion circuit may need APC (an automatic phase control circuit) for forming 2 fsc, the APC comprising a quartz oscillation circuit, a phase detection circuit and a frequency multiplier; the burst gate pulse arranged so as to synchronize with the burst signal after being delayed in phase from the horizontal syn - chronizing signal; a digital circuit for dividing the horizontal synchronizing pulse by two. If, however, the playback chromatic signal processing circuit has the built - in TV system conversion circuit, including the playback luminance signal processing circuit as shown in Fig. 1, it would become possi - ble to put every signal for common use, so that the circuitry may be simplified further.

With the sub-carrier signal (carrier component) formed by the same quartz oscillation circuit OSC 1 as a reference in this embodiment, highly accurate signal processing can be performed as not only the chromatic signal playback but also the TV system conversion is processed thereby. Con - sequently, it is possible to minimize variations in temperatures as well as processing elements in addition to the influence of variation with time as compared with a case where the playback chro - matic signal processing circuit and the TV system conversion circuit have reference oscillation circuits and two pulse generating circuits, respectively.

Incidentally, the color sub-carrier in the NTSC system differs from that in the PAL system. Since the original color sub-carrier is subjected to the low frequency conversion process in the VHS system, however, the oscillating frequency of the reference frequency oscillation circuit OSC 1 is selectively set to about 4.43 MHz corresponding to the PAL system in the playback chromatic signal processing circuit when any software in the general NTSC system is played back with the TV set in the PAL system. In this case, the TV set even in the NTSC system responds to about 4. 43 MHz corresponding to the PAL system in a limited area and conversely even the TV set in the PAL system responds to about 3.58 MHz corresponding to the NTSC system. Therefore, the original color sub- carrier before being recorded, regardless of what it is, raises no problem. The quartz oscillator provided in the playback chromatic signal processing circuit in conformity with the color sub-carrier in the TV set for use in playback is selected in such a way that the frequency of the color sub-carrier is selected in conformity with the corresponding TV system.

Fig. 12 is a block diagram of another exem - plary TV system conversion circuit according to the present invention. In this embodiment, the system conversion is made by combining the B - Y axis inversion, a switch SW 4 and a burst substitution circuit together. Fig. 8 is a circuit diagram illustrating a burst substitution circuit embodying the present invention. A chromatic signal Cin is supplied via a coupling capacitor C1 to a buffer am - plifier B1. Bias voltage is applied to the connection between resistors R1, R2. A substitution burst sig - nal Bin is also applied via a coupling capacitor C2 to the input of a buffer amplifier B2. A switch to be controlled by the burst gate pulse is provided for the outputs of the buffer amplifiers B1, B2.

When the NTSC system is converted to the PAL system in Fig. 12, the switch SW 4 is al - ternately switched to a and b every 1 H period. When the PAL system is converted to the NTSC system, the switch SW 4 is connected b side when the burst signal B is on the + 135 ° line and to a side when it is on the - 1350 ° line to effect the B - Y axis inversion. In the burst substitution circuit, the signal is set to + 180 by the substitution circuit when the PAL system is converted to the NTSC system. The signal is set to + 135 with the non - inverted B - Y axis and it is set to 1350 with inverted B - Y axis when the NTSC system is converted to the PAL system. In this way, the NTSC and PAL systems can alternately be con - verted to each other. Since the doubled carrier signal, the burst gate pulse, the 1/2 divided horizontal pulse and the like are required for the B - Y axis inversion as set forth above, the idea of sim - plifying the circuitry, stabilizing the playback operation and improving its precision can be imple - mented by integrating the playback chromatic sig - nal processing circuit and the playback luminance signal processing circuit into one chip.

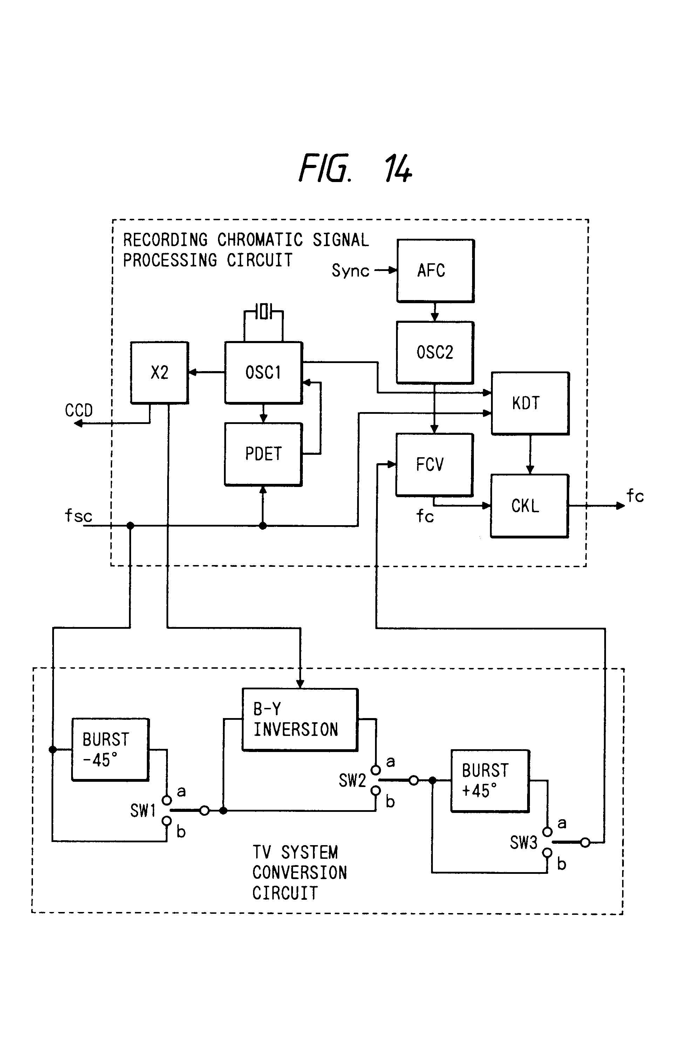

Fig. 14 is a block diagram illustrating an exemplary TV system conversion circuit and an ex - emplary playback chromatic signal processing circuit in a VTR recording circuit corresponding to what is shown in Fig. 2.

The applied chromatic signal fsc together with the burst signal included therein is subjected to phase shifting and B - Y axis inversion in a circuit comprising a phase shifting circuit at burst - -45°, a switch SW 1, a B - Y axis inversion circuit, a switch SW 2, a phase shifting circuit at burst + 45 and a switch SW 3.

In the playback chromatic signal processing circuit, the chromatic signal fsc thus converted in terms of the system is converted to a low frequency color signal fc. On receiving both the burst signal included in the applied chromatic signal fsc and the oscillating output formed by a quarts os - cillation circuit OSC 1, the phase detection circuit PDET controls the oscillating frequency of the quartz oscillation circuit OSC 1 in such a way that both conform to each other. Consequently, a con - tinuous reference frequency signal in phase - syn - chronization with the burst signal can be formed. This oscillating frequency signal is applied to the multiplier circuit x2 and also output as a clock pulse for CCD likewise. Moreover, the doubled reference frequency signal 2 fsc is supplied to the B - Y axis inversion circuit provided in the TV system conversion circuit.

The frequency converter circuit FCV for forming the low frequency color signal fc causes the chromatic signal subjected to the system conversion to be multiplied by the oscillating signal formed by the oscillation circuit OSC 2 and forms the color signal fc whose frequency has been de - creased by the difference. The oscillating frequency of the oscillation circuit OSC 2 is controlled by the synchronizing signal Sync separated in the playback luminance signal processing circuit (not shown) and the automatic color control circuit AFC.

On receiving the applied chromatic signal fsc and the oscillating output formed by the oscillation circuit OSC the killer detection circuit KDT detects the condition of synchronization and the burst am - plitude, and controls the color killer circuit CKL so as to prevent the low frequency color signal fc from being output by muting it when the synchronization is not accomplished or when the burst amplitude is too small.

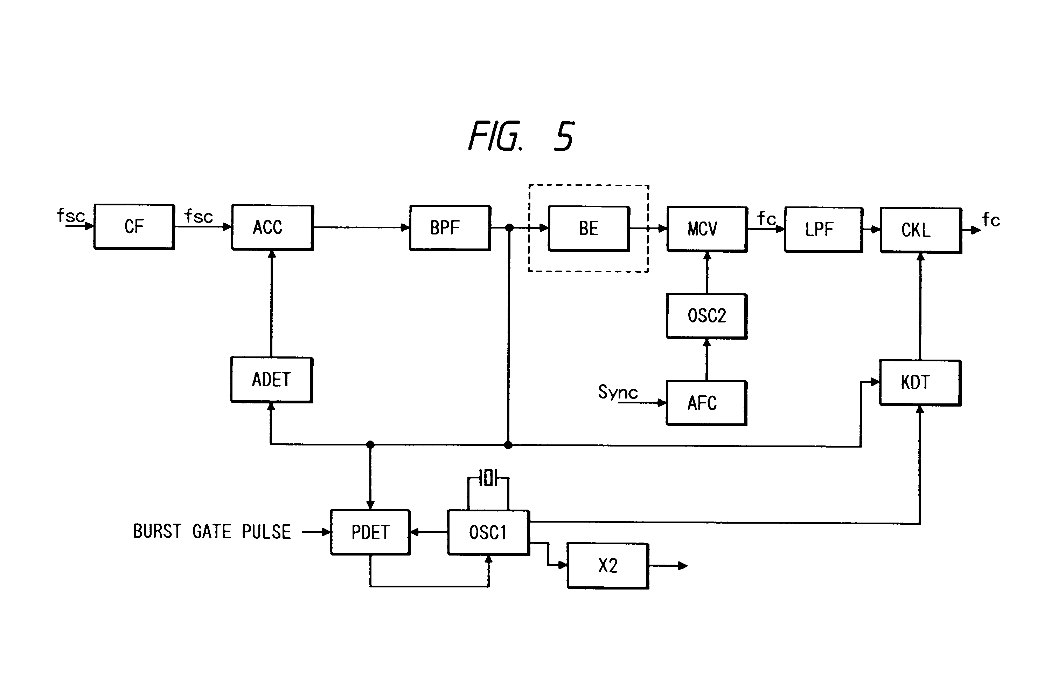

Fig. 5 is a detailed block diagram illustrating an exemplary playback chromatic signal record processing circuit.

The applied chromatic signal fsc is applied to the automatic color control circuit ACC after its luminance signal component and the like have been removed by the comb line filter CF and set at a fixed level therein. The automatic color control circuit ACC is controlled by the output signal of the detection circuit ADET for receiving the output signal passed through the band pass filter BPF at the following stage. In this embodiment, a burst emphasis circuit BE is provided at the output of the band pass filter BPF. This circuit BE is used to increase the burst signal by + 6 dB at the time the color signal is processed in the NTSC system in the recording time standard mode and the treble mode and to put through the input signal at the time the color signal is processed in the double mode of the NTSC system and in the PAL system. The chromatic signal fsc that has been output via each of the circuits mentioned above is applied to a frequency converter circuit MCV before being converted to the low frequency color signal fc. A frequency converter circuit MCV causes the chro - matic signal fsc to be multiplied by the oscillating frequency formed by the oscillation circuit OSC 2 to form an output signal corresponding to the sum of and the difference between the frequencies. The low-pass filter LPF takes out the frequency equivalent to the difference and outputs the color signal fc subjected to the low frequency conversion.

The color killer circuit CKL is provided on the output side. This color killer circuit CKL is con - trolled by the killer detection circuit KDT. On receiving the input chromatic signal fsc passed through the band pass filter BPF and the reference frequency signal formed by the phase detection circuit PDET and the reference oscillation circuit OSC 1, the killer detection circuit KDT detects the condition of synchronization and the burst am - plitude, and controls the color killer circuit CKL so as to prevent the low frequency color signal fc from being output by muting it when the synchronization is not accomplished or when the burst amplitude is too small. In the playback chromatic signal processing circuit, the phase detection circuit PDET intermittently operated by the burst gate pulse operates to compare the burst signal included in the input chromatic signal fsc with the oscillating output of the quartz oscillation circuit OSC 1 in terms of the phase and controls the quartz oscillation circuit OSC 1 in such a way as to cause the oscillation circuit OSC to oscillate in synchronization with the burst signal by forming a control signal corresponding to the phase difference. The multiplier circuit x2 doubles the oscillating frequency of the oscillation circuit OSC 1 and used the frequency thus doubled for a clock pulse in the CCD circuit for noise reduction, and for the B - Y axis inversion employed in the TV system conver - sion circuit.

Even in the TV system conversion circuit pro - vided in the playback chromatic signal processing circuit, attempts have been made to put the circuits for common use, these circuits including the APC circuit, the burst gate pulse generating circuit, the horizontal pulse separation circuit for use in divid - ing the horizontal pulse to 1/2 and the like, so that the signal processing operation is made possible with the simplified circuitry as well as extra accu - racy.

The following advantages are obtainable from the embodiments shown:
(1) The playback luminance signal processing circuit and the playback chromatic signal processing circuit for receiving a recorded image signal, and the TV system conversion circuit for selectively converting one TV system to another which is different from the former wherein the chromatic signal played back by the playback chromatic signal processing circuit is recorded are integrated onto one semiconductor integrated circuit, whereby the doubled carrier sig - nals formed in the playback chromatic signal processing circuit and the playback luminance signal processing circuit and those which are used to form the burst gate pulse, the horizontal synchronizing pulse and the like can be put for common use with the effect of simplifying the circuitry involved, thus making it accurate and stable to process any signal therein.
(2) The mutual TV system conversion from NTSC to PAL and vice versa makes it possible to deal with simply any software in the NTSC or PAL system with the possibility of constructing any VTR practically anywhere in the world.
(3) The playback luminance signal processing circuit and for receiving a recorded image signal for television, the TV system conversion circuit for selectively converting one TV system to an - other which is different from the former that has been input, and the playback chromatic signal processing circuit for receiving the output signal of the TV system conversion circuit are in - tegrated onto one semiconductor integrated circuit, whereby the doubled carrier signals formed in the playback chromatic signal processing circuit and the playback luminance signal processing circuit and those which are used to form the burst gate pulse, the horizontal synchronizing pulse and the like can be put for common use with the effect of simplifying the circuitry involved, thus making it accurate and stable to process any signal therein.
(4) The mutual TV system conversion from NTSC to PAL and vice versa makes it possible to construct any VTR capable of recording data in either of the NTSC and PAL systems.
(5) The aforementioned TV system conversion circuit has the function of converting one TV system to another wherein the input signal is different and by providing the TV system with the function of directly putting through the signal in the system selectively input under the con - version ON/OFF control signal, flexible playback and recording operations are made possible.

Although a description has been give of spe - cific embodiments of the present invention made by the present inventors, the present invention is not limited to the aforementioned embodiments but may needless to say be changed or modified without departing from the spirit and the scope thereof. For instance, VTR loaded with the playback signal processing circuit or the semicon - ductor integrated circuit for processing a recording signal according to the present invention may ad - ditionally have the function of mutually matching the number of scanning lines as another point of difference between the NTSC and PAL systems. This function may be incorporated in the afore - mentioned semiconductor integrated circuit or provided outside. Specific circuit blocks for carry - ing out the signal playback and recording processes may be formed in various forms. Moreover, the VTR system may be what is applicable to an 8-mm system other than VHS.

The present invention may widely be applicable to semiconductor integrated circuits such as VTRs.

The effects of the present invention disclosed in this specification may be summarized briefly and representatively as follows. One semiconductor integrated circuit incorporates the playback lu - minance signal processing circuit and the playback chromatic signal processing circuit for receiving a recorded image signal, and the TV system con - version circuit for selectively converting one TV system to another which is different from the former wherein the chromatic signal played back by the playback chromatic signal processing circuit is recorded; or otherwise the playback luminance signal processing circuit for receiving an image signal for television, the TV system conversion circuit for selectively converting one TV system to another that has been input, and a recording chro - matic signal processing circuit for receiving the output signal of the TV system conversion circuit, whereby the doubled carrier signals formed in the playback chromatic signal processing circuit and the playback luminance signal processing circuit and those which are used to form the burst gate pulse, the horizontal synchronizing pulse and the like can be put for common use with the effect of simplifying the circuitry involved, thus making it accurate and stable to process any signal therein.

## Claims

1. A semiconductor integrated circuit device for image processing, said device comprising: a playback luminance signal processing circuit; a playback chromatic signal processing circuit for receiving a recorded image signal; and a TV system conversion circuit for selectively converting one TV system to another which is different from the former wherein the chromatic signal played back by said playback chromatic signal processing circuit is recorded.

2. A semiconductor integrated circuit device for image processing as claimed in claim 1, wherein said playback chromatic signal processing circuit fetchs a color burst signal based on a synchronizing signal formed in said playback luminance signal processing circuit.

3. A semiconductor integrated circuit device for image processing as claimed in claim 2, wherein said TV systems are NTSC and PAL systems.

4. A semiconductor integrated circuit device for image processing as claimed in claim 3, wherein said TV system conversion circuit in - verts a B - Y axis based on a color subcarrier formed in said playback chromatic signal pro - cessing circuit

5. A semiconductor integrated circuit device for image processing, said device comprising a recording luminance signal processing circuit for receiving image signals for television; a TV system conversion circuit for selectively con - verting one TV system to another which is different from the former that has been input; and a recording chromatic signal processing circuit for receiving an output signal of said TV system conversion circuit.

6. A semiconductor integrated circuit device for image processing as claimed in claim 5, wherein said playback chromatic signal processing circuit fetchs a color burst signal based on a synchronizing signal formed in said playback luminance signal processing circuit.

7. A semiconductor integrated circuit device for image processing as claimed in claim 6, wherein said TV systems are NTSC and PAL systems.

8. A semiconductor integrated circuit device for image processing as claimed in claim 7, wherein said TV system conversion circuit in - verts a B - Y axis based on a color subcarrier formed in said playback chromatic signal pro - cessing circuit.

9. A semiconductor integrated circuit device for image processing as claimed in claim 5, wherein said TV system conversion circuit has means for converting one TV system to an - other which is different from said input signal, and means for putting through the system signal selectively received by a conversion ON/OFF control signal and causing the system signal to be output.
